Europäisches Patentamt

European Patent Office

Office européen des brevets

(11) Publication number: · **0 301 036**
**B1**

# EUROPEAN PATENT SPECIFICATION

(45) Date of publication of patent specification: 16.05.90

(51) Int. Cl.⁵: **H 02 P 7/36**

(21) Application number: 87907850.9

(22) Date of filing: 07.10.87

(86) International application number:
PCT/US87/02568

(87) International publication number:
WO 88/02574 07.04.88 Gazette 88/08

(54) CONTROL SYSTEM FOR A VARIABLE-RELUCTANCE MOTOR, AND METHOD.

(43) Date of publication of application:
01.02.89 Bulletin 89/05

(45) Publication of the grant of the patent:
16.05.90 Bulletin 90/20

(84) Designated Contracting States:
DE FR GB

(56) References cited:
DE-A-3 244 105
US-A-4 070 665
US-A-4 357 569
US-A-4 598 289

INDUSTRY APPLICATIONS SOCIETY, IEEE-IAS-
1985 Annual Meeting, Toronto, 6th-11th
October 1985, pages 753-758, IEEE, New York,
US; A. EL-ANTABLY et al.: "Proposed control
strategy for a cageless reluctance motor using
terminal voltage and current"

(73) Proprietor: MOOG INC.
Jamison Road
East Aurora New York 14052 (US)

(72) Inventor: GERBETZ, Robert, P.
8 Fox Chapel Drive
Orchard Park, NY 14127 (US)

(74) Representative: Knott, Stephen Gilbert et al
MATHISEN, MACARA & CO. The Coach House
6-8 Swakeleys Road
Ickenham Uxbridge Middlesex UB10 8BZ (GB)

Courier Press, Leamington Spa, England.

## Description

Technical Field

The present invention relates generally to the field of circuits and systems for controlling the operation of polyphase variable-reluctance motors, and to methods for controlling such motors.

Background Art

Polyphase variable-reluctance motors offer advantages of ruggedness, simplicity, low-cost, efficiency and high operating speed, over other motor types. However, upon information and belief, for want of an adequate control system, the use of such motors has been heretofore limited to relatively simple applications, such as fan drives and the like.

In such a motor, the reluctance between the rotor and a particular stator pole varies between a minimum and a maximum as a function of the angular position of the rotor relative to the stator. The angular position of the rotor at which the minimum reluctance occurs is defined as the "direct axis", while the angular position at which the maximum reluctance occurs is defined as the "quadrature axis".

U.S. Patent No. 3,783,358 describes a two-axis control system for a polyphase motor, using a form of resolver feedback. However, the drive system regulates voltage in the direct- and quadrature-axes in terms of a fixed relationship. The quadrature-axis voltage is a function of the product of speed and torque. The direct-axis voltage is another function of speed and torque. Operation beyond base speed with this drive system is not possible since the direct-axis voltage varies directly with speed in a fixed relationship in an effort to maintain rated excitation flux in the motor. At very low speeds, a constant bias voltage (supplied along line $V_c$) is applied to the quadrature-axis summing amplifier to generate excitation flux. At high speeds, the excitation is applied to the direct-axis summing amplifier. The functions of the quadrature-axis multiplier and direct-axis summing amplifier reverse as a function of speed, since the winding impedence changes 90° in phase, making the voltage regulation control scheme undefined in a low-speed operating range. An attempt was made to compensate for this problem by introducing the constant bias voltage. The inventive control system differs from that taught by U.S. Patent No. 3,783,358 in that the low-speed operation is well-defined, and much wider speed ranges are attainable with a given motor.

U.S. Patents No. 3,863,120 and 3,911,339 describe current control systems for polyphase reluctance-type motors, and cite the difficulties encountered in operating a polyphase reluctance motor by attempting to control voltage. According to these control systems, the direct-axis flux is maintained constant by maintaining constant direct-axis current, and the phase and magnitude of stator current are changed with torque demand to reflect a proportional increase in quadrature-axis current. In these control systems, the direct-axis current is assumed fixed, and current vs. torque and current phase angle vs. torque relationships are used to provide an output torque proportional to a torque command. These relationships are predetermined, and are internal functions of the control system. Hence, operation only up to a base speed maximum is possible with this control. The improved control system differs from these earlier control schemes in that the direct- and quadrature-axis currents are functions of different parameters, constant-horsepower and constant-speed ranges are attainable, and appropriate current vs. torque and phase angle vs. torque relationships do not have to be programmed into the control.

Disclosure of the Invention

The present invention provides an improved control system for operating a variable-reluctance motor which is adapted to be supplied with a controllable terminal voltage and which has a rotor rotatably mounted on a stator. The improved control system broadly includes: command means for indicating a desired motor parameter (e.g., rotor velocity, torque, etc.); measuring means for determining the actual value of such parameters; first summing means for determining an error between the desired and actual parameter values; control means for supplying a terminal voltage to the motor as a function of the actual parameter value; first generating means for generating a direct-axis current command signal as a function of the terminal voltage and the actual parameter value; second generating means for generating a quadrature-axis current command signal as a function of the parameter error; second summing means for summing the direct- and quadrature-axis current command signals; and current supply means for supplying current to the windings of the motor as a function of such summed current command signals.

In use, the improved control system provides a unique method of controlling a polyphase variable-reluctance motor to which a controllable terminal voltage is supplied, which method comprises the steps of: commanding a desired value of a motor parameter; determining the actual value of such parameter; summing the desired and actual parameter values to determine an error therebetween; controlling the terminal voltage supplied to the motor as a function of the actual parameter value; generating a direct-axis current command signal as a function of the terminal voltage and the actual parameter value; generating a quadrature-axis current command signal as a function of the parameter error; summing the direct- and quadrature-axis current command signals; and supplying current to the windings of the motor as a function of such summed current command signals.

Accordingly, the general object of the invention is to provide an improved control system for selectively controlling the operation of a polyphase variable-reluctance motor.

Another object is to provide an improved method of controlling such a variable-reluctance motor, in

2

order to afford operating characteristics beyond those heretofore obtainable with prior art motor designs.

These and other objects and advantages will become apparent from the foregoing and ongoing written specification, the drawings, and the appended claims.

Brief Description of the Drawings

Fig. 1 is a graph depicting typical single-phase voltage and current relationships, as a function of time, for a variable-reluctance motor.

Fig. 2 is a vector diagram of the various voltages and currents shown in Fig. 1, for a motoring condition, with the values of $i_d$ and $i_q$ being selected from Combination 2.

Fig. 3 is a vector diagram of the various voltages and currents shown in Fig. 1 if the quadrature-axis current is shifted 180° in phase, this figure showing the motor as operating in a generating mode.

Fig. 4 is a composite graph of inductance vs. angle and torque vs. angle, and schematically depicts the position of the rotor relative to the stator at selected relative angular positions of 0°, 90° and 180°.

Fig. 5 is a vector diagram of the various voltages and currents, if the values of $i_d$ and $i_q$ are selected from Combination 1.

Fig. 6 is a graph of speed (RPM) vs. horsepower (HP), and illustrates a base speed ($RPM_b$) as separating successive operating ranges of constant-torque and constant-horsepower.

Fig. 7 depicts the relationships between thermally-limited power, pullout power and terminal voltage, as a function of speed, for a motor having the operating characteristics shown in Fig. 6.

Fig. 8 depicts the relationships between desired power, pullout power and terminal voltage, as a function of speed, for a motor designed to deliver a desired power at top speed.

Fig. 9 is a block diagram of the improved control system in which the direct- and quadrature-axis currents are controlled separately.

Mode(s) of Practicing the Invention

At the outset, it should be clearly understood that like reference numerals are intended to identify the same parts, portions, surfaces or signals consistently throughout the several drawing figures, as such parts, portions, surfaces or signals may be further described or explained by the entire written specification, of which this detailed description is an integral part. Unless otherwise indicated, the drawings are intended to read (e.g., cross-hatching, arrangement of parts, etc.) together with the specification, and are to be considered a portion of the entire "written description" of this invention. As used in the following description, the terms "horizontal", "vertical", "left", "right", "up" and "down", as well as adjectival and adverbial derivatives thereof (e.g., "horizontally", "rightwardly", "upwardly", etc.) refer to the orientation of the illustrated structure, as the particular drawing figure faces the reader. Similarly, the terms "inwardly" and "outwardly" simply refer to the orientation of a surface relative to its axis of elongation, or axis of rotation, as appropriate. Unless otherwise indicated, all angles are expressed in terms of electrical degrees.

A polyphase variable-reluctance motor is broadly defined as any polyphase motor in which the reluctance between particular rotor and stator poles varies between a minimum and a maximum over an angular displacement of 180/P mechanical degrees (where P = number of poles), or 90 electrical degrees. The rotor position at which the minimum reluctance occurs is the "direct axis", and the rotor axis at which the maximum reluctance occurs is the "quadrature axis".

When properly energized, a polyphase winding generates a rotating magnetomotive force (mmf) wave relative to the direct- and quadrature-axes of the rotor. This wave may be regarded as being the vector sum of the component mmf's in the direct- and quadrature-axes. These two component mmf's are, in turn, generated by the direct- and quadrature-axes currents. The vector sum of these currents is the stator current in one phase.

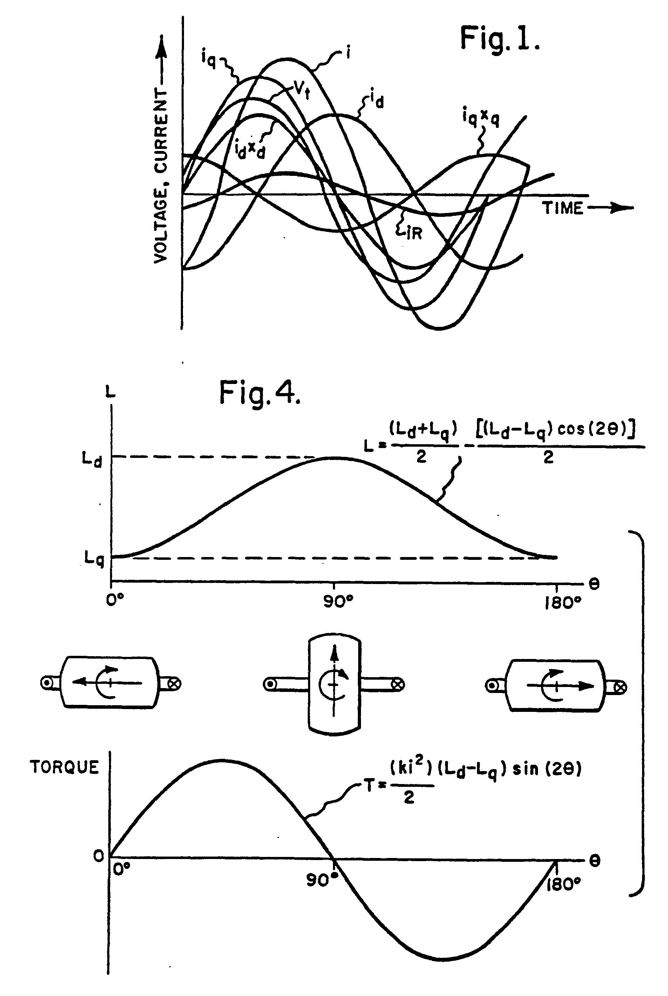

Typical voltage and current relationships of a variable-reluctance motor are shown on a per-phase and per-axis basis in Fig. 1. All wave forms are shown as being sinusoidal. The quadrature-axis current $i_q$ is shown as leading the direct-axis current $i_d$ by 90°. For purposes of illustration, $i_q$ and $i_d$ are depicted as having different maximum amplitudes, although this need not be so. In Fig. 1, the stator current i is obtained by superimposing $i_q$ and $i_d$. The reactive voltage drop $i_q x_q$ due to $i_q$, leads $i_q$ by 90°. Similarly, the reactive voltage drop $i_d x_d$ due to $i_d$, leads $i_d$ by 90°. The voltage drop iR due to the coil resistance R, is shown as being in phase with the stator current. The terminal voltage $V_t$ is the sum of the various individual voltages:

$$(1) \qquad V_t = i_q x_q + iR + i_d x_d$$

The electromagnetic power input ($P_e$) to each phase is given by equations (2) or (3):

$$(2) \qquad P_e = i_q(i_d x_d) - i_d(i_q x_q)$$

This can be simplified to:

$$(3) \qquad P_e = i_d i_q (x_d - x_q)$$

The electromagnetic power input is simply the reluctance term of the synchronous motor equation. It should also be noted that if $P_e$ is a positive value, a motoring condition is indicated.

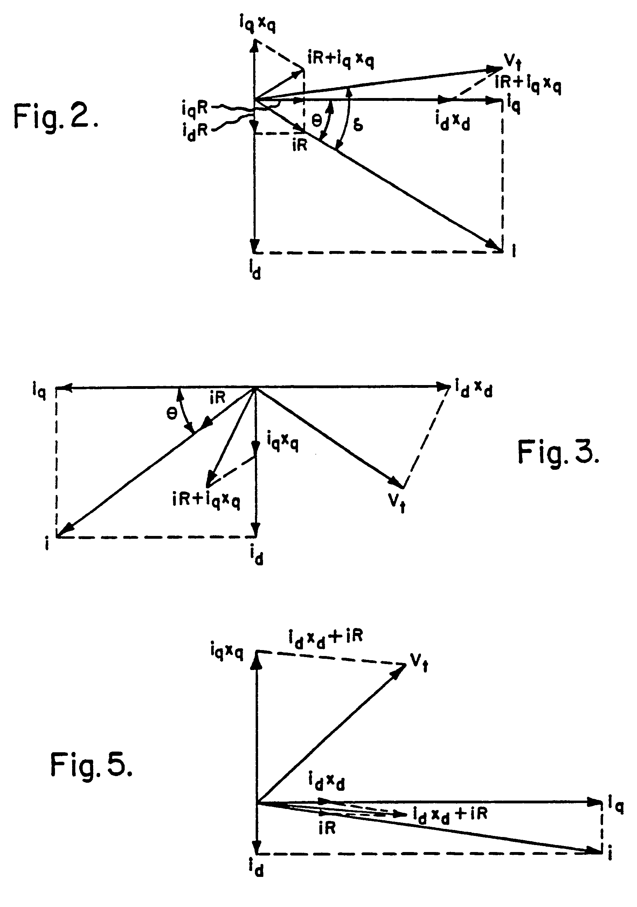

The voltage and current relationships depicted in Fig. 1, are presented in vector diagram form in Fig. 2 for a motoring condition. The angle $\delta$ is the angle between the voltage $V_t$ and current i. Hence, the motor will operate at a power factor of cos $\delta$.

Fig. 3 is a vector diagram showing the various current and voltage relationships if $i_q$ is shifted 180° in phase from that shown in Fig. 2. In this condition, $i_q$ is a negative value. Thus, the electromagnetic power input $P_e$ to each phase is given by equations (4), (5) and (6):

$$\text{(4)} \qquad P_e = i_d(-i_q)(x_d - x_q) = -i_d i_q x_d - i_d(-i_q)x_q = i_d i_q x_d + i_d i_q x_q$$

$$\text{(5)} \qquad P_e = i_d i_q (x_q - x_d)$$

$$\text{(6)} \qquad P_e = -i_d i_q (x_d - x_q)$$

From equation (6), it can be seen that if either the direct- or quadrature-axis current is shifted 180° in phase from its motoring phase angle (e.g., as shown in Fig. 2), the electromagnetic power input will be negative, indicating that the motor is generating.

The force (F) generated by a moving body in an electromagnetic field is proportional to the change in energy (E) with position (x), as stated in equation (7):

$$\text{(7)} \qquad F = dE/dx$$

The electromagnetic energy stored in a coil of inductance (L) with a current (i) flowing therethrough, is stated in equation (8):

$$\text{(8)} \qquad E = \tfrac{1}{2}Li^2$$

If the current is held constant, but the inductance varies with the angular position ($\theta$) of the rotor relative to a stator, a torque (T) will be produced according to equation (9):

$$\text{(9)} \qquad T = -ki^2 dL/d\theta$$

where k is a constant.

The inductance in a reluctance motor, as a function of rotor angle in electrical degrees, is stated in equation (10):

$$\text{(10)} \qquad L = (L_d + L_q)/2 - [(L_d - L_q)\cos(2\theta)]/2$$

where $L_d$ and $L_q$ are the inductances in angular positions of minimum and maximum reluctance, respectively. Thus, $L_q$ and $L_d$ are the quadrature- and direct-axis inductances, respectively. Equation (9) is plotted in the upper portion of Fig. 4.

The torque vs. rotor electrical angle ($\theta$) function is given by equation (11):

$$\text{(11)} \qquad T = (ki^2/2)(L_d - L_q)\sin(2\theta)$$

Equation (11) is plotted in the lower portion of Fig. 4, along with schematic representations showing the orientation of the rotor relative to the coil at selected angular positions (i.e., 0°, 90°, 180°). This figure depicts that the stator mmf is centered at an angle of 90°. The total stator mmf is equal to the direct-axis mmf at 90°, and is equal to the quadrature-axis mmf at angles of 0° and 180°. The mmf in the quadrature- and direct-axes, and hence the per-phase current in such axes, are stated in equations (12) and (13), while equations (14) and (15) express the relationship between $i_d$, $i_q$ and $\theta$.

$$\text{(12)} \qquad i_q = i\cos(\theta)$$

$$\text{(13)} \qquad i_d = i\sin(\theta)$$

$$\text{(14)} \qquad i_d/i_q = i\sin(\theta)/i\cos(\theta) = \tan(\theta)$$

$$\text{(15)} \qquad \theta = \tan^{-1}(i_d/i_q)$$

From Fig. 2, it can be seen that since i is the vector sum of $i_d$ and $i_q$:

$$(16) \qquad i^2 = i_d{}^2 + i_q{}^2$$

By substituting equations (10) and (16) into equation (9), and simplifying, electromagnetic torque may be expressed as:

$$(17) \qquad T = k i_d i_q (L_d - L_q)$$

The direct- and quadrature-axis reactances, $x_d$ and $x_q$, respectively, which are simply the products of the electrical angular frequency ($\omega = 2\pi f$) and the inductance for each axis, are set forth in equations (18) and (19):

$$(18) \qquad x_d = \omega L_d$$

$$(19) \qquad x_q = \omega L_q$$

Substituting equations (18) and (19) into equation (2), $P_e$ can be expressed as:

$$(20) \qquad P_e = i_d i_q (x_d - x_q) = i_d i_q \omega (L_d - L_q) \quad \text{at} \quad \text{rad/sec} \text{ Solving for } i_d,$$

$$(21) \qquad i_d = P_e / i_q \omega (L_d - L_q)$$

Adverting to Fig. 2, it can also be seen that since $V_t$ is a vector sum:

$$(22) \qquad (i_d x_d + i_q R)^2 + (i_q x_q - i_d R)^2 = V_t{}^2$$

Equations (18, (19) and (21) can be substituted into equation (22), simplified, and solved for $i_q$:

$$(23) \qquad i_q = P_e / \omega (L_d - L_q) i_d$$

Equation (23) may be substituted into equation (22), and solved for $i_d$:

$$(24) \qquad i_d = \left[ \frac{(V_t{}^2 - 2P_e R) \pm [2P_e R - V_t{}^2)^2 - 4(R^2 + \omega^2 L_d{}^2) P_e{}^2 (L_q{}^2 + R^2/\omega^2)(L_d - L_q)^2]^{\frac{1}{2}}}{2(R^2 + \omega^2 L_d{}^2)} \right]^{\frac{1}{2}}$$

Similarly, equation (23) may be solved for $i_d$, and that value may be substituted into equation (22), simplified, and solved for $i_q$:

$$(25) \qquad i_q = \left[ \frac{(V_t{}^2 - 2P_e R) \pm [2P_e R - V_t{}^2)^2 - 4(R^2 + \omega^2 L_q{}^2) P_e{}^2 (L_d{}^2 + R^2/\omega^2)(L_d - L_q)^2]^{\frac{1}{2}}}{2(R^2 + \omega^2 L_q{}^2)} \right]^{\frac{1}{2}}$$

But if the direct- and quadrature-axis impedences, $z_d$, $z_q$, respectively, are:

$$(26) \qquad z_d = (R^2 + \omega^2 L_d{}^2)^{\frac{1}{2}}$$

$$(27) \qquad z_q = (R^2 + \omega^2 L_q{}^2)^{\frac{1}{2}}$$

Then, equations (24) and (25) can be further simplified to:

$$(28) \qquad i_q = \left[ \frac{(V_t{}^2 - 2P_e R) \pm [(2P_e R - V_t{}^2)^2 - 4 z_q{}^2 z_d{}^2 P_e{}^2 /(x_d - x_q)^2]^{\frac{1}{2}}}{2(z_q)^2} \right]^{\frac{1}{2}}$$

(29)

$$i_d = \left[\frac{(V_t{}^2 - 2P_eR) \pm [(2P_eR - V_t{}^2)^2 - 4z_q{}^2 z_d{}^2 P_e{}^2/(x_d - x_q)^2]^{\frac{1}{2}}}{2(z_d)^2}\right]^{\frac{1}{2}}$$

Thus, for each operating point (i.e., $V_t$, $\omega$, $P_e$), there are two values of $i_d$ and $i_q$ that satisfy the above relationships. The product $i_d i_q$ must be constant regardless of the individual values of $i_d$ and $i_q$, and there can be only two combinations of $i_d$ and $i_q$ whose products will yield the same result. The two combinations are set forth herebelow:

## Combination 1:

(29)
$$i_{q1} = \left[\frac{(V_t{}^2 - 2P_eR) + [(2P_eR - V_t{}^2)^2 - 4z_q{}^2 z_d{}^2 P_e{}^2/(x_d - x_q)^2]^{\frac{1}{2}}}{2(z_q)^2}\right]^{\frac{1}{2}}$$

(30)
$$i_{d1} = \left[\frac{(V_t{}^2 - 2P_eR) - [(2P_eR - V_t{}^2)^2 - 4z_q{}^2 z_d{}^2 P_e{}^2/(x_d - x_q)^2]^{\frac{1}{2}}}{2(z_d)^2}\right]^{\frac{1}{2}}$$

## Combination 2:

(31)
$$i_{q2} = \left[\frac{(V_t{}^2 - 2P_eR)^2 - [(2P_eR - V_t{}^2)^2 - 4z_q{}^2 z_d{}^2 P_e{}^2/(x_d - x_q)^2]^{\frac{1}{2}}}{2(z_q)^2}\right]^{\frac{1}{2}}$$

(32)
$$i_{d2} = \left[\frac{(V_t{}^2 - 2P_eR)^2 + [(2P_eR - V_t{}^2)^2 - 4z_q{}^2 z_d{}^2 P_e{}^2/(x_d - x_q)^2]^{\frac{1}{2}}}{2(z_d)^2}\right]^{\frac{1}{2}}$$

For minimization of the current, the combination of $i_d$ and $i_q$ within the least resultant current should be used, and it can be shown that Combination 2 results in the least resultant current. Fig. 2 depicts the operating condition of the motor with $i_d$ and $i_q$ at Combination 2. Fig. 5 depicts the operating condition of such motor with $i_d$ and $i_q$ at alternative values selected from Combination 1.

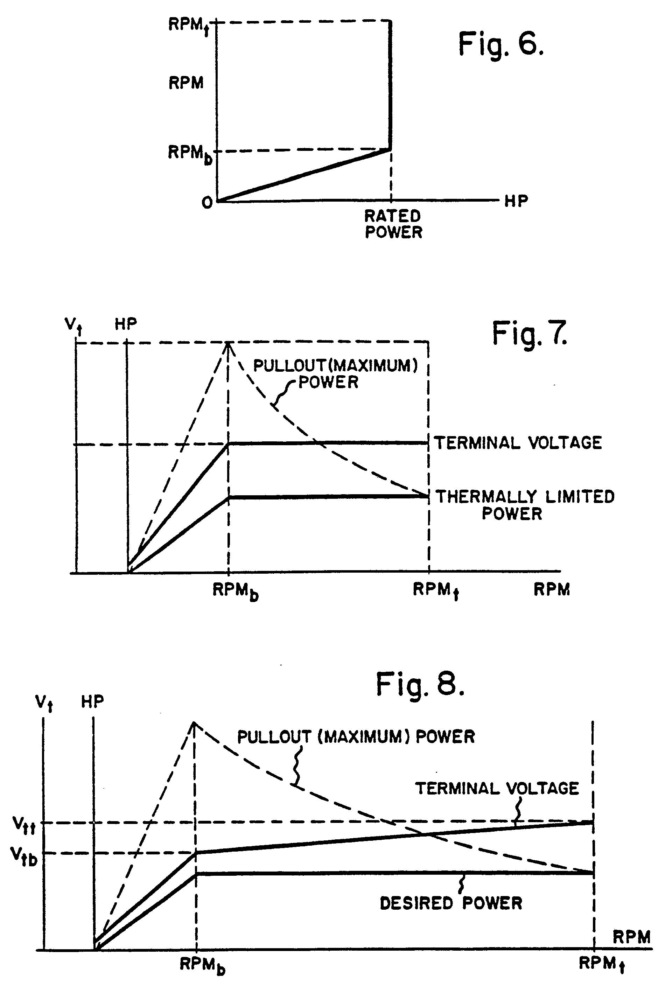

In designing a motor/control system for general and varied application, it may be desirable to provide a constant-torque operating range and a constant-horsepower operating range, as shown in Fig. 6. The speed at which the operation changes from constant-torque to constant-horsepower, is defined as the base speed ($RPM_b$). The maximum operating speed is indicated at $RPM_t$. Thus, the motor is designed to operate at constant torque from speeds of zero to $RPM_b$, and at constant horsepower between speeds of $RPM_b$ and $RPM_t$.

To determine the suitability of the motor to supply the operating characteristics shown in Fig. 6, the pullout characteristics at a given set of terminal conditions must be determined in terms of the $i_d$ and $i_q$ relationship of Combination 2. The following equation approximates pullout power at a constant frequency and terminal voltage.

(33)
$$P_{po} = \pm \frac{V_t{}^2 (L_d - L_q)}{2\omega L_d L_q}$$

But $(L_d - L_q)/2L_dL_q$ is a constant (K) depending on motor geometry and magnetic saturation due to load. Therefore,

$$(34) \qquad P_{po} \doteq \frac{KV_t^2}{\omega}$$

Thus, the pullout power (i.e., the maximum power at which the motor can operate) is proportional to the square of the terminal voltage divided by $2\pi$ times frequency, multiplied by a constant. For a given terminal voltage, the pullout power is inversely proportional to rotational speed in RPM.

Still referring principally to Fig. 6, to operate at constant horsepower between the base speed ($RPM_b$) and top speed ($RPM_t$), the pullout power at base speed must be ($RPM_b/RPM_t$) times the rated power at base speed. If the terminal voltage ($V_t$) is held constant in the constant-horsepower range, the speed, power and terminal voltage relationships can be seen in Fig. 7. The power output is limited by the temperature rise of the motor winding on a continuous output basis, as represented by the thermally-limited power vs. speed relationships. The pullout power vs. speed curve illustrates that considerably more output power is available at lower motor speeds than that dictated by thermal limitations. In other words, additional pullout power is available for thermally-limited time periods.

If a constant-horsepower speed range ($RPM_t/RPM_b = n$) is desired, and if the ratio of pullout power at base speed ($P_{po_b}$) to the desired constant power ($P_r$) is less than n, the terminal voltage at top speed ($V_{t_t}$) must be greater than the terminal voltage at base speed ($V_{t_b}$) according to the following relationship:

$$(35) \qquad V_{t_t} = V_{t_b}[nP_r/P_{po_b}]^{\frac{1}{2}}$$

Equation (35) illustrates that the terminal voltage needed to deliver a desired power at top speed, depends on the desired power, speed range, and the pullout power at base speed. The motor power and terminal voltage vs. speed characteristics for $V_{t_t} > V_{t_b}$ are shown in Fig. 8.

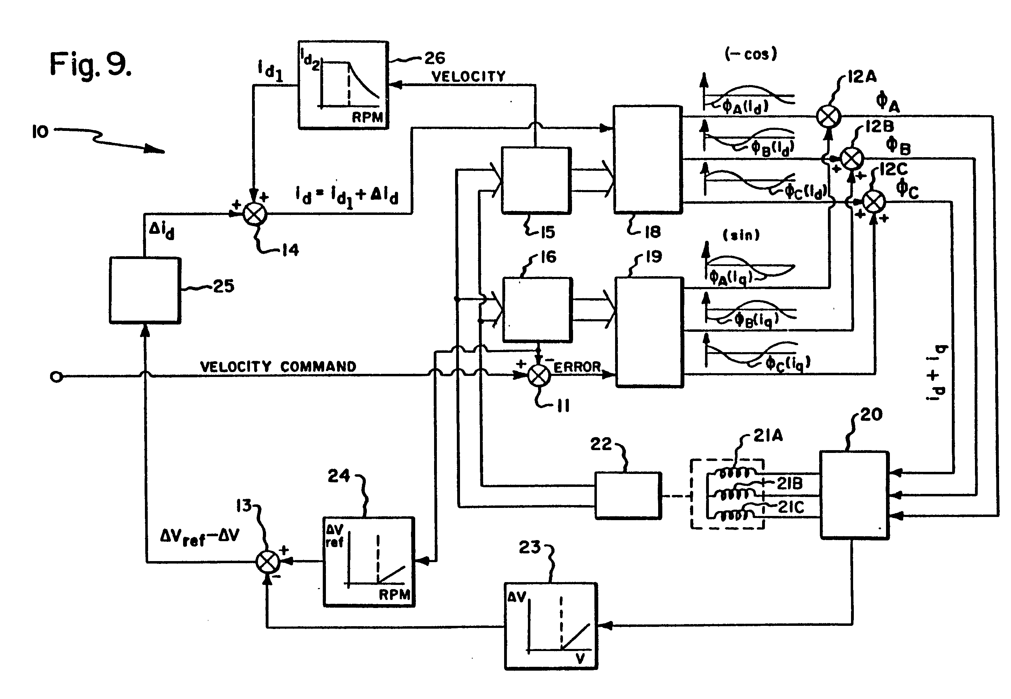

Fig. 9 is a block diagram of a presently-preferred form of the improved control system, generally indicated at 10, for selectively controlling the operation of a variable-reluctance motor of the type heretofore described.

The improved control system is shown as including summing points 11, 12A, 12B, 12C, 13, 14; two 3-channel digital phase generators 15, 16; a direct-axis 3-channel amplitude-modulated digital-to-analog (D/A) converter 18; a quadrature-axis 3-channel amplitude-modulated D/A converter 19; a current-controlled pulse-width-modulated (PWM) inverter 20 arranged to supply current to motor windings 21A, 21B, 21C; a resolver 22 arranged to determine the angular position of the rotor relative to the stator; a function generator 23 arranged to supply a negative signal to summing point 13 as a function of the terminal voltage supplied by inverter 20; a function generator 24 arranged to supply a positive signal to summing point 13 as a function of the actual rotor velocity; an amplifier/phase compensation circuit 25 arranged to supply a positive input to summing point 14 as a function of the error signal supplied by summing point 13; and another function generator 26 arranged to supply another positive input to summing point 14 as a function of the actual rotor velocity signal supplied by direct-axis phase generator 15. The output signal of summing point 14 is supplied to direct-axis D/A converter 18.

Thus, resolver 22 supplies an analog sine-cosine rotor position feedback signal to both phase generators 15, 16, which, in turn, produce output signals indicating the actual rotor velocity. Phase generator 15 supplies its actual velocity signal to function generator 26, while phase generator 16 supplies its actual velocity signal as a negative input to summing point 11. A command signal, reflective of the desired rotor velocity, is supplied as a positive input to summing point 11. Thus, summing point 11 provides a velocity error signal, which is supplied to quadrature-axis D/A converter 19.

The digital outputs of phase generators 15, 16 are supplied to the direct- and quadrature-axis D/A converters 18, 19, respectively. Each of these converters is arranged to produce three separate phase-shifted amplitude-modulated sinusoidal waves, one for each motor phase. These three phases are individually indicated by suffixes A, B, C. The amplitudes of the waves generated by direct-axis converter 18 are modulated by a direct-axis current signal $i_d$ supplied from summing point 14. The three wave forms generated by converter 18 are $(-\cos\theta)$ functions, and are out-of-phase with respect to one another by interval angles of 120°. Thus, while the three waves generated by converter 18 each have the same maximum amplitude (i.e., as determined by the magnitude of signal $i_d$), phase B is delayed 120° with respect to phase A, and phase C is delayed 120° with respect to phase B. These three waves are supplied as positive inputs to summing points 12A, 12B, 12C, respectively.

On the other hand, the amplitude of the three waves generated by the quadrature-axis converter 19 are modulated by the velocity error signal supplied from summing point 11. These three waves are $(\sin\theta)$ functions, and are also out-of-phase with respect to one another by interval angles of 120°. Thus, while the three waves generated by converter 19 have the same maximum amplitude (i.e., as determined by the velocity error), phase B is delayed by 120° with respect to phase A, and phase C is delayed by 120° with respect to phase B. These three waves are also supplied as positive inputs to summing points 12A, 12B, 12C, respectively. Thus, these three summing points are arranged to add the waves generated by converters 18 and 19 on a like-phase basis. The summed waves represent the sum of current command signals $i_d$ and $i_q$, per-phase, and are supplied to inverter 20.

7

Inverter 20 produces a terminal voltage $V_t$, and supplies appropriate currents $i_a$, $i_b$, $i_c$ to motor windings 21A, 21B, 21C, respectively. The terminal voltage feedback signal is supplied to function generator 23, which generates a change-in-voltage ($\Delta V$) signal as a function of the terminal voltage. The magnitude of $\Delta V$ is substantially equal to the feedback voltage which is created between $V_{t_b}$ and $V_{t_t}$. The $\Delta V$ output from block 23 is supplied as a negative input to summing point 13.

The actual rotor velocity signal provided by phase generator 16 is supplied to function generator 24, which produces a change-in-reference-voltage signal ($\Delta V_{ref}$) in response to the actual rotor velocity. This function accounts for the increase in the terminal voltage as a function of speed, above base speed. This $\Delta V_{ref}$ is supplied as a positive input to summing point 13. Thus summing point 13 is arranged to produce an output error signal equal to $\Delta V_{ref} - \Delta V$.

Compensation circuit 25 produces an output signal ($\Delta i_d$) as a function of the error signal supplied from summing point 13. This $\Delta i_d$ signal is supplied as a positive input to summing point 14. The actual rotor velocity signal is supplied by phase generator 15 to function generator 26, which produces a signal ($i_{d_1}$) indicating the nominal value of the direct-axis current. Summing point 14 is arranged to receive signals $\Delta i_d$ and $i_{d_1}$ as positive inputs, and produces an output signal $i_d$ equal to their sum. Signal $i_d$ is supplied to direct-axis converter 18, and is used to control the amplitudes of the waves supplied to summing points 12A, 12B, 12C.

Therefore, the present invention broadly provides an improved control system for controlling the operation of a polyphase variable-reluctance motor, which system broadly includes: command means for indicating a desired motor parameter; measuring means for measuring the actual value of such parameter; first summing means for determining an error between the desired and actual parameter values; control means for supplying a terminal voltage to the motor as a function of the actual parameter value; first generating means for generating a direct-axis current command signal as a function of the terminal voltage and the actual parameter value; second generating means for generating a quadrature-axis current command signal as a function of the parameter error; second summing means for summing the direct- and quadrature-axis current command signals; and current supply means for supplying current to the windings of the motor as a function of such summed current command signals.

In use, the improved control system performs an improved method of controlling the operation of such a polyphase variable-reluctance motor, which method comprises the steps of: commanding a desired value of a motor parameter; determining the actual value of the parameter; summing the desired and actual parameter values to determine an error therebetween; controlling the terminal voltage supplied to the motor as a function of the actual parameter value; generating a direct-axis current command signal as a function of the terminal voltage and the actual parameter value; generating a quadrature-axis current command signal as a function of the parameter error; summing the direct- and quadrature-axis current command signals; and supplying current to the windings of the motor as a function of such summed current command signals.

It should be noted that the specific control system is not limited to the exact form shown in Fig. 9. For example, the resolver produces an analog signal, which is first converted to a digital signal, and then converted back to an analog signal. This is not invariable, and, in fact, may be readily changed by persons skilled in this art. Other types of current amplifiers or current-supply circuits may be substituted for inverter 20. These are only a few contemplated changes, and are not intended to be all-inclusive of the full range of possible changes.

## Claims

1. A method of controlling a polyphase variable-reluctance motor (21) to which controllable terminal voltage ($V_t$) is supplied, said motor having a rotor rotatably mounted on a stator, comprising the steps of:
   commanding a desired value of a motor parameter;
   determining the actual value of said parameter;
   summing said desired and actual parameter values to determine a parameter error therebetween;
   controlling said terminal voltage as a function of said parameter error;
   generating a direct-axis current command signal as a function of said terminal voltage and said actual parameter value;
   generating a quadrature-axis current command signal as a function of said parameter error;
   summing said direct- and quadrature-axis current command signals; and
   supplying current to the windings of said motor as a function of such summed current command signals.

2. A method as set forth in claim 1 wherein said parameter is the velocity of said motor.

3. A control system for a polyphase variable-reluctance motor which is adapted to be supplied with a terminal voltage ($V_t$), said motor having a rotor rotatably mounted on a stator; comprising:
   command means for indicating a desired motor parameter;
   measuring means (22) for determining the actual value of said motor parameter;
   first summing means (11) for determining an error between said desired and actual parameter values;
   control means (23, 24, 25, 26) for supplying terminal voltage to said motor as a function of said actual parameter value;

first generating means (15, 18) for generating a direct-axis current command signal as a function of said terminal voltage and said actual parameter value;

second generating means (16, 19) for generating a quadrature-axis current command signal as a function of said parameter error;

second summing means (12) for summing said direct- and quadrature-axis current command signals; and

current supply means (20) for supplying current to the windings of said motor as a function of such summed current command signals.

4. A control system as set forth in claim 3 wherein said motor parameter is the velocity of said motor.

5. A control system as set forth in claim 4 wherein said measuring means (22) includes a resolver arranged to produce a signal reflective of the angular position of said rotor, and includes a first phase generator (15) supplied with such resolver signal and operatively arranged to produce an output signal indicating the velocity of said rotor.

6. A control system as set forth in claim 5 wherein said control means (26) is supplied with said first phase generator output signal.

7. A control system as set forth in claim 4 wherein said first generating means includes a first phase generator (15) and a first amplitude-modulated digital-to-analog converter (18).

8. A control system as set forth in claim 5 wherein said second generating means includes a second phase generator (16) and a second amplitude-modulated digital-to-analog converter (19).

9. A control system as set forth in claim 3 wherein said current supply means (22) is an inverter.

**Patentansprüche**

1. Verfahren zur Steuerung eines mehrphasigen Motors (21) mit veränderbarem magnetischem Widerstand, dem eine einstellbare Klemmenspannung ($V_t$) zugeführt wird, und der einen drehbar an einem Stator montierten Rotor aufweist, mit den Arbeitsschritten:

einen Sollwert einer Motorhilfsgröße vorzugeben,

einen Istwert der Hilfsgröße zu bestimmen,

zur Bestimmung eines Fehlers der Hilfsgröße ihren Soll- und Istwert aufzusummieren,

die Klemmenspannung als Funktion des Fehlers der Hilfsgröße einzustellen,

als Funktion der Klemmenspannung und des Istwertes der Hilfsgröße ein Stromvorgabesignal für die direkte Achse zu erzeugen,

als Funktion des Fehlers der Hilfsgröße ein Stromvorgabesignal für die um 90° phasenverschobene Achse zu erzeugen,

die beiden Stromvorgabesignale für die direkte Achse und die um 90° phasenverschobene Achse aufzusummieren,

und Strom als Funktion solcher aufsummierter Stromvorgabesignale den Wicklungen des Motors zuzuleiten.

2. Verfahren, wie im Anspruch 1 dargelegt, bei der die Hilfsgröße die Drehzahl des Motors ist.

3. Steuerungssystem für einen mehrphasigen Motor mit veränderbarem magnetischem Widerstand, der mit einer Klemmenspannung ($V_t$) gespeist werden kann und einen an einem Stator drehbar montierten Rotor aufweist,

mit Vorgabemitteln zum Anzeigen einer Sollhilfsgröße des Motors,

mit Meßeinrichtungen (22) zum Bestimmen des Istwertes der Motorhilfsgröße,

mit einem ersten Summenbildner (11) zum Bestimmen eines Fehlers zwischen dem Soll- und Istwert der Hilfsgröße,

mit einer Steuerung (23, 24, 25, 26) zur Zuführung der Klemmenspannung zu dem Motor als Funktion des Istwertes der Hilfsgröße,

mit ersten erzeugenden Hilfsmitteln (15, 16) zum Erzeugen eines Stromvorgabesignals für eine direkte Achse als Funktion der Klemmenspannung und des Istwertes der Hilfsgröße,

mit zweiten erzeugenden Hilfsmitteln (16, 19) zum Erzeugen eines Stromvorgabesignals für eine um 90° phasenverschobene Achse als Funktion des Fehlers der Hilfsgröße,

mit einem zweiten Summenbildner (12) zum Aufsummieren der Stromvorgabesignale für die direkte und die um 90° phasenverschobene Achse

und mit Stromzuführungsmitteln (20) zur Stromzufuhr zu den Motorwicklungen als Funktion dieser aufsummierten Stromvorgabesignale.

4. Steuerungssytem, wie im Anspruch 3 dargelegt, bei dem die Motorhilfsgröße die Drehzahl des Motors ist.

5. Steuerungssystem, wie im Anspruch 4 dargelegt, bei dem die Meßeinrichtungen (22) einen Analysator zur Erzeugung eines Signals, das die Winkelstellung des Rotors wiedergibt, und einen ersten Phasengenerator (15) enthalten, der mit diesem Signal des Analysators gespeist wird und ein Signal erzeugt, das die Drehzahl des Motors anzeigt.

6. Steuerungssystem, wie im Anspruch 5 dargelegt, bei dem die Steuerung (26) mit dem von dem ersten Phasengenerator abgegebenen Signal gespeist wird.

7. Steuerungssystem, wie im Anspruch 4 dargelegt, bei dem die ersten erzeugenden Hilfsmittel einen ersten Phasengenerator (15) und einen ersten amplitudenmodulierten Digital-Analog-Wandler (18) enthalten.

8. Steuerungssystem, wie im Anspruch 5 dargelegt, bei dem die zweiten erzeugenden Hilfsmittel einen zweiten Phasengenerator (16) und einen zweiten amplitudenmodulierten Digital-Analog-Wandler (19) enthalten.

9. Steuerungssystem, wie im Anspruch 3 dargelegt, bei dem die Stromzuführungsmittel (22) einen Inverter enthalten.

**Revendications**

1. Procédé de commande d'un moteur polyphasé à réluctance variable (21) auquel une tension réglable aux bornes $(V_t)$ est transmise, le moteur ayant un rotor monté afin qu'il puisse tourner sur un stator, comprenant les étapes suivantes:

la commande d'une valeur voulue d'un paramètre du moteur,

la détermination de la valeur réelle du paramètre,

la sommation des valeurs voulue et réelle du paramètre afin qu'une erreur sur le paramètre soit déterminée entre elles,

le réglage de la tension aux bornes en fonction de l'erreur sur le paramètre,

la création d'un signal de commande de courant d'axe direct en fonction de la tension aux bornes et de la valeur réelle du paramètre,

la création d'un signal de commande de courant d'axe en quadrature en fonction de l'erreur sur le paramètre,

la sommation des signaux de commande de courant d'axe direct et d'axe en quadrature, et

la transmission d'un courant aux bobinages du moteur en fonction de ces signaux ajoutés de commande de courant.

2. Procédé selon la revendication 1, dans lequel le paramètre est la vitesse du moteur.

3. Ensemble de commande d'un moteur polyphasé à réluctance variable qui est destiné à recevoir une tension aux bornes $(V_t)$, le moteur ayant un rotor monté sur un stator afin qu'il puisse tourner, comprenant:

un dispositif de commande destiné à indiquer un paramètre voulu du moteur,

un dispositif de mesure (22) destiné à déterminer la valeur réelle du paramètre du moteur,

un premier dispositif de sommation (11) destiné à déterminer l'erreur entre les valeurs voulue et réelle du paramètre,

un dispositif de réglage (23, 24, 25, 26) destiné à transmettre la tension aux bornes au moteur en fonction de la valeur réelle du paramètre,

un premier dispositif (15, 18) générateur d'un signal de commande de courant d'axe direct en fonction de la tension aux bornes et de la valeur réelle du paramètre,

un second dispositif générateur (16, 19) destiné à créer un signal de commande d'axe en quadrature en fonction de l'erreur sur le paramètre,

un second dispositif de sommation (12) destiné à ajouter les signaux de commande de courant d'axes direct et en quadrature, et

un dispositif d'alimentation en courant (20) destiné à transmettre un courant aux bobinages du moteur en fonction des signaux ajoutés de commande de courant.

4. Ensemble de commande selon la revendication 3, dans lequel le paramètre du moteur est la vitesse du moteur.

5. Ensemble de commande selon la revendication 4, dans lequel le dispositif de mesure (22) comporte un résolveur destiné à créer un signal qui reflète la position angulaire du rotor, et comporte un premier générateur (15) de phase qui reçoit le signal du résolveur et qui est destiné à produire un signal de sortie représentatif de la vitesse du rotor.

6. Ensemble de commande selon la revendication 5, dans lequel le dispositif de réglage (26) reçoit le signal de sortie du premier générateur de phase.

7. Ensemble de commande selon la revendication 4, dans lequel le premier dispositif générateur comprend un premier générateur de phase (15) et un premier convertisseur numérique-analogique (18) modulé en amplitude.

8. Ensemble de commande selon la revendication 5, dans lequel le second dispositif générateur comprend un second générateur de phase (16) et un second convertisseur numérique-analogique (19) modulé en amplitude.

9. Ensemble de commande selon la revendication 3, dans lequel le dispositif d'alimentation en courant (22) est un convertisseur.

# Fig.1.

# Fig.4.

$$L = \frac{(L_d + L_q)}{2} - \frac{[(L_d - L_q)\cos(2\theta)]}{2}$$

$$T = \frac{(ki^2)(L_d - L_q)\sin(2\theta)}{2}$$

1

Fig.2.

Fig.3.

Fig.5.

Fig. 6.

Fig. 7.

Fig. 8.

3

Fig. 9.